# EUROPÄISCHE PATENTSCHRIFT

(11) **EP 2 335 982 B1**
(45) Veröffentlichungstag und Bekanntmachung des Hinweises auf die Patenterteilung: **10.07.2013**
(21) Anmeldenummer: 10015697.5
(22) Anmeldetag: 15.12.2010
(51) Int. Cl.: B60R 19/18

(54) **Absorberelement für ein Kraftfahrzeug**
Absorber element for a motor vehicle
Elément d'absorbeur pour un véhicule automobile

(30) Priorität: 16.12.2009 DE 202009017015 U
(43) Veröffentlichungstag der Anmeldung: 22.06.2011
(73) Patentinhaber: Rehau AG + Co, 95111 Rehau (DE)
(72) Erfinder: Yildirim, Mustafa, 95145 Oberkotzau (DE); Kind, Franz-Georg, 95176 Konradsreuth (DE); Michel, Peter, 95028 Hof (DE)

(56) Entgegenhaltungen:
- EP-A2- 1 676 752
- WO-A1-2009/101981
- WO-A1-2009/121509
- WO-A2-2004/071811
- WO-A2-2009/056939
- DE-A1- 19 847 743
- DE-A1-102006 062 294
- JP-A- 2003 182 481
- US-A- 5 407 239
- US-A- 6 059 331
- US-A1- 2007 246 956

## Beschreibung

Die vorliegende Erfindung betrifft ein Absorberelement für ein Kraftfahrzeug gemäß dem Oberbegriff des Anspruchs 1. Ein derartiges Absorberelement ist z.B. aus der US 2007/0246956 A1 bekannt.

Absorberelemente für Kraftfahrzeuge dienen bekannterweise dazu die Stoßenergie - z.B. infolge eines Zusammenstoßes mit einem anderen Kraftfahrzeug - für eine wirksame Schadensbegrenzung hinreichend zu absorbieren. Die bekannten Absorberelemente bestehen meist aus Schaumstoff mit einer erwünschten Dichte. Sie sind an einem Biegeträger des Kraftfahrzeugs angebracht. Der Biegeträger selbst ist meist über ein weiteres Dämpfungselement, wie einer sogenannten Crash-Box, mit einer Flanschplatte verbunden, die am Fahrzeugrahmen befestigt ist. Das Absorberelement ist bei bekannten Dämpfersystemen für Kraftfahrzeuge das äußerste vorstehende Element, welches z.B. bei einem frontalen Zusammenstoß zeitweise einen direkten Kontakt zu dem jeweiligen Stoßpartner, wie beispielsweise einem anderen Kraftfahrzeug, aufweist.

Bei den aus Schaumstoff bzw. aufgeschäumten Kunststoffmaterial bestehenden Absorberelementen ist der wirksame Verformungsweg insbesondere in Querrichtung des Absorberelements wesentlich kleiner ausgebildet als eine mittlere Querstreckung des Absorberelements. Dies ist eine Folge der Neigung des Schaumstoffs zur Blockbildung. Bei einem Aufprall bzw. einem Stoßvorgang bilden sich angrenzend an die jeweilige Stoßfläche des Absorberelements infolge einer Deformierung des porösen Schaumstoffmaterials feste Blöcke aus. Mit zunehmender Vergrößerung eines derartigen Blocks erhöht sich auch die Stoßkraft übertragende Block-Fläche, einhergehend mit einer Reduzierung des von der Block-Fläche übertragenden Drucks, wobei bei Überschreitung einer gewissen Block-Fläche der Druck derart gering ist, dass an den Block bzw. die Block-Fläche angrenzende Schaumstoff-Bereiche nicht mehr deformiert werden. Die Stoßkraft wird dann ohne wesentlichen Deformationsweg bzw. ohne merkliche Verformung des Absorberelements durch das Absorberelement geleitet.

Um trotz Blockbildung noch eine hinreichende Dämpfung mit einem hinreichenden Deformationsweg zu ermöglichen, darf der Schaumstoff nicht zu fest ausgebildet sein, was wiederum mit einer entsprechenden Volumenvergrößerung des Absorberelements bzw. einer Vergrößerung des für das Absorberelement bereitzustellenden Bauraums verbunden ist. Ferner neigt Schaumstoff infolge seiner porösen Struktur zur Wasseraufnahme, einhergehend mit einer Gewichtserhöhung und Volumenerhöhung in feuchter Umgebung.

### Zugrundeliegende Aufgabe

Der vorliegenden Erfindung liegt daher die Aufgabe zugrunde, ein Absorberelement für ein Kraftfahrzeug anzugeben, welches im Kollisionsfall die Stoßenergien sehr wirksam absorbiert und welches zudem eingerichtet ist, den für das Absorberelement bereitzustellenden Bauraum im Unterschied zu bekannten Lösungen wesentlich zu reduzieren.

### Erfindungsgemäße Lösung

Diese Aufgabe wird erfindungsgemäß mit einem Absorberelement für ein Kraftfahrzeug mit den Merkmalen des Anspruchs 1 gelöst.

Das Absorberelement ist als länglicher Extrusionshohlkörper mit einer Mehrzahl von wenigstens drei Hohlräumen ausgebildet, wobei der Extrusionshohlkörper außerhalb der Hohlräume mit einer Schiene eines Biegeträgers des Kraftfahrzeugs verbindbar ist.

Das Absorberelement ist als länglicher Extrusionshohlkörper mit einer Mehrzahl von wenigstens drei Hohlräumen ausgebildet, die durch eine Mehrzahl von wenigstens zwei Trennwänden voneinander getrennt sind. Im Kollisionsfall, wie z.B. bei einem Frontalzusammenstoß zweier Fahrzeuge, ermöglicht der Extrusionshohlkörper eine wirksame Absorption der Stoßenergie, derart, dass die Hohlkörper im Kollisionsfall in sich zusammenfallen bzw. unter Faltenbildung zusammengestaucht werden und/oder in einen übereinanderliegenden Zustand zusammengestaucht werden. Im Unterschied zu bekannten Lösungen aus Schaumstoff, wo der wirksame Verformungsweg durch Blockbildung begrenzt ist, ist bei dem Extrusionshohlkörper im Kollisionsfall eine im Unterschied zu diesen bekannten Lösungen nur sehr gering ausgeprägte Blockbildung vorhanden. Daher unterscheidet sich der mögliche Verformungsweg bei Einwirkung einer Stoßkraft mit einem Kraftanteil quer zur Längserstreckung des Extrusionshohlkörpers nur geringfügig von einer mittleren Quererstreckung des Extrusionshohlkörpers, so dass der für das Absorberelement bereitzustellende Bauraum im Unterschied zu bekannten Lösungen wesentlich verkleinert bzw. reduziert werden kann.

Bei wenigstens einem Teil der Trennwände unterscheiden sich die Festigkeiten der Trennwände voneinander, wobei die Trennwände mit unterschiedlichen Festigkeiten derart zueinander angeordnet sind, dass in einem Verbindungs-Zustand, in dem der Extrusionshohlkörper auf die Schiene aufgeschoben oder auf die Schiene aufgeschnappt ist, von jeweils zwei Trennwänden diejenige mit dem größeren Abstand zu der Schiene eine geringere Festigkeit aufweist. Derart ausgebildete Trennwände sind beispielsweise durch Mehrkomponentenextrusion herstellbar.

Es sind also Trennwände mit unterschiedlichen Festigkeiten vorgesehen, wobei die Festigkeit von Trennwänden, die sich im Verbindungs-Zustand näher an der Schiene befinden, größer ausgebildet ist als die Festigkeit von Trennwänden mit größerem Abstand zu der Schiene. Auf diese Weise kann die Stoßenergie stufenförmig absorbiert werden, derart, dass der größte Teil der Stoßenergie von den sich näher an der Schiene befindlichen Trennwänden absorbiert wird. Dies hat den Vorteil, dass z.B. bei geringeren Aufprallgeschwindigkeiten die zu absorbierende Stoßenergie von weicher ausgebildeten Trennwänden bzw. von Trennwänden mit geringerer Festigkeit absorbiert wird, was insbesondere bei der Fahrzeugverzögerung vorteilhaft ist. Diese praktische Ausführungsform ermöglicht dabei eine sehr kompakte Bauweise des Absorberelements.

Wenigstens eine Trennwand kann besonders bevorzugt wenigstens teilweise aus einem aufgeschäumten Kunststoffmaterial oder wenigstens teilweise aus einem metallischen Material oder wenigstens teilweise aus einem Polymermaterial in Form eines Kunststoffmaterials bestehen. Insbesondere können bevorzugt Trennwände aus unterschiedlichen Materialien miteinander kombiniert vorgesehen sein, derart, dass wenigstens zwei Trennwände aus unterschiedlichen Materialien bestehen. Die Hohlräume können ferner vorzugsweise eine Struktur bilden, die im Querschnitt wabenförmig ausgebildet ist.

Der Extrusionshohlkörper besteht vorzugsweise wenigstens teilweise (oder zur Gänze) aus einem Polymermaterial, wobei das Polymermaterial ein Thermoplast und/oder ein Duroplast umfassen kann. Insbesondere kann das Polymermaterial Polypropylen und/oder Polyamid und/oder PVC umfassen. Zur Erhöhung der Festigkeit kann das Polymermaterial mit einem Glasfaser-Material und/oder einem Naturfaser-Material und/oder einem Kohlefaser-Material und/oder Aramidfaser-Material verstärkt sein, wobei die Fasern dieser Materialien z.B. in Form von Kurzfasern oder Langfasern oder Endlosfasern ausgebildet sein können. Die Länge der Kurzfasern kann bevorzugt innerhalb eines Bereichs von 0 mm bis 1 mm liegen. Denkbar ist beispielsweise auch, dass die Länge der Kurzfasern bis zu 5 mm beträgt. Die Länge der Langfasern kann bevorzugt innerhalb eines Bereichs von 5 mm bis 25 mm liegen. Denkbar ist beispielsweise auch, dass die Länge der Langfasern größer als 1 mm ist und ferner bis zu 50 mm betragen kann. Durch geeignete Wahl der Faserart und/oder der Menge des Fasermaterials und/oder der Faserlänge kann die Festigkeit des Extrusionshohlkörpers durch entsprechende Aufbereitung des für die Extrusions-Herstellung des Extrusionshohlkörpers verwendeten Materials gezielt eingestellt werden.

Alternativ kann der Extrusionshohlkörper z.B. auch um eine Querachse des Extrusionshohlkörpers gebogen ausgebildet bzw. gebogen extrudiert sein, so dass der Extrusionshohlkörper an entsprechend gebogene Biegeträger anpassbar ist.

Der Extrusionshohlkörper ist außerhalb des Hohlraums mit einer Schiene eines Biegeträgers des Kraftfahrzeugs verbindbar. Vorzugsweise ist der Extrusionshohlkörper in Längsrichtung auf die Schiene aufschiebbar oder auf die Schiene aufschnappbar. Mittels dieser Verbindungsarten kann der Extrusionshohlkörper auf praktische Weise mit der Schiene des Biegträgers verbunden werden. Der Biegeträger selbst kann über ein weiteres Dämpfungselement, wie einer sogenannten Crash-Box, mit einer Flanschplatte verbunden sein, die am Fahrzeugrahmen des Kraftfahrzeugs befestigt ist.

Bei einer praktischen Ausführungsform ist ein einziger Längsabschnitt des Extrusionshohlkörpers zum ortsfesten Befestigen des Extrusionshohlkörpers an der Schiene mittels eines Befestigungsmittels eingerichtet.

Um den Extrusionshohlkörper mittels eines Befestigungsmittels ortsfest an der Schiene zu befestigen, kann der einzige Längsabschnitt z.B. wenigstens eine Öffnung aufweisen, welche wenigstens einen Wandungsbereich des Extrusionshohlkörpers oder einen an die Wandung des Extrusionshohlkörpers angrenzenden Bereich vorzugsweise in Querrichtung desselben durchsetzt. Insbesondere kann die Öffnung den Extrusionshohlkörper z.B. auch zur Gänze in Querrichtung durchsetzen. Die Öffnung ist hierbei zum ortsfesten Verbinden des Extrusionshohlkörpers mit der Schiene für die Durchführung eines Befestigungsmittels, wie z.B. einer Schraube oder eines beliebigen anderen Verbindungsglieds bzw. Befestigungsglieds vorgesehen. Das Befestigungsmittel kann auch in Form eines Clips ausgebildet sein, um den Extrusionshohlkörper auf praktische Weise ortsfest an der Schiene zu befestigen. Die ortsfeste Befestigung vermeidet insbesondere eine Verschiebung bzw. Lageänderung des Extrusionshohlkörpers relativ zu der Schiene, insbesondere während des Betriebs des Kraftfahrzeugs.

Dass lediglich ein einziger Längsabschnitt des Extrusionshohlkörpers zum ortsfesten Befestigen des Extrusionshohlkörpers an der Schiene mittels eines Befestigungsmittels eingerichtet ist, hat den Vorteil, dass durch Temperaturänderungen hervorgerufene Verlängerungen bzw. Ausdehnungen oder Verkürzungen bzw. Stauchungen in Längsrichtung des Extrusionshohlkörper keine Materialspannungen zur Folge haben, welche zu Beschädigungen, wie Rissen, an dem Extrusionshohlkörper führen können. Der Extrusionshohlkörper kann sich bei Temperaturänderungen ohne wesentlichen mechanischen Widerstand seitlich bzw. in Längsrichtung ausdehnen bzw. zusammenziehen, einhergehend mit der Vermeidung von kritischen Materialspannungen an dem Extrusionshohlkörper.

Vorzugsweise ist der Längsabschnitt auf halber Länge des Extrusionshohlkörpers vorgesehen. Dass der einzige Längsabschnitt auf halber Länge bzw. annähernd oder im Wesentlichen auf halber Länge des Extrusionshohlkörpers vorgesehen ist, hat den Vorteil, dass eine infolge der Befestigung sich ggf. ausbildende Biegung bzw. Durchbiegung des Extrusionshohlkörpers symmetrisch bzw. im Wesentlichen symmetrisch um den Längsabschnitt bzw. eine mittige Position ist, einhergehend mit einer im Vergleich zu einer unsymmetrischen Verteilung wesentlich verbesserten mechanischen Stabilität.

Ferner ist mit Vorsehen des Längsabschnitts auf halber Länge des Extrusionshohlkörpers der weitere Vorteil verbunden, dass im Falle eines seitlichen bzw. seitlich versetzten Aufpralls auf Höhe des Absorberelements das Absorberelement seitlich ausweichen kann ohne zu brechen oder zu reißen, so dass insbesondere auch gefährdende Teile auf der Fahrbahn vermieden werden. Insbesondere wird im Falle eines seitlich versetzten Aufpralls durch Vorsehen des Längsabschnitts auf halber Länge des Extrusionshohlkörpers eine Zerstörung der Dämpfungselemente, z.B. in Form der sogenannten Crash-Boxen durch seitliches Ausweichen des Absorberelements vermieden, wobei die Dämpfungselemente meist an den beiden Endabschnitten des Biegeträgers befestigt sind. Ganz im Unterschied zu bekannten Lösungen, wo derartige Dämpfungselemente oft im Falle eines seitlich versetzten Aufpralls zerstört oder beschädigt werden.

Bei der Erfindung weist der Extrusionshohlkörper wenigstens drei Hohlräume auf, die durch wenigstens zwei Trennwände voneinander getrennt sind. Ein Extrusionshohlkörper mit wenigstens drei Hohlräumen, die durch zwei Trennwände voneinander getrennt sind, kann im Vergleich zu einem Extrusionshohlkörper mit einem einzigen Hohlraum mit einer erhöhten Festigkeit ausgebildet werden. Durch geeignete Dimensionierung der Festigkeit der Trennwände wird ein erwünschtes Absorptionsverhalten des Absorberelements bereitsgestellt. Auch kann durch geeignete Dimensionierung der Größe bzw. Form der Hohlräume und/oder durch geeignete Dimensionierung der Festigkeit der Wandung ein erwünschtes Absorptionsverhalten des Absorberelements zusätzlich bereitgestellt werden.

Besonders bevorzugt weist der Extrusionshohlkörper in Umgebung der Trennwand eine Wandstärke bzw. eine Dicke auf, die größer ist als die Wandstärke bzw. Dicke der Trennwand. Dies hat den Vorteil, dass im Kollisionsfall als schwächstes Glied zunächst die Trennwände brechen und wenigstens teilweise faltend (bzw. unter Faltenbildung) zusammengestaucht werden bzw. in einen übereinanderliegenden Zustand zusammengestaucht werden, einhergehend mit einer das Kraftfahrzeug schonenden Absorption der Stoßenergie. Vorzugsweise liegt hierbei die Wandstärke bzw. Dicke der Trennwand innerhalb eines Bereichs des 0,4-fachen bis 0,8-fachen der Wandstärke bzw. Dicke in Umgebung der Trennwand. Wenn die Wandstärke bzw. Dicke der Trennwand innerhalb eines Bereichs des 0,4-fachen bis 0,8-fachen der Wandstärke bzw. Dicke in Umgebung der Trennwand liegt, ist eine das Kraftfahrzeug besonders schonende Absorption der Stoßenergie möglich, selbst im Falle einer sehr hohen Stoßenergie (wie z.B. bei einem Frontalzusammenstoß bei hohen Geschwindigkeiten. Hierfür beträgt die Wandstärke bzw. Dicke in Umgebung der Trennwand vorzugsweise 1 mm bis 10 mm oder 1,5 mm bis 8 mm oder 2 mm bis 5 mm.

Vorzugsweise kann in die Trennwand wenigstens ein Verstärkungselement eingebettet sein, das wenigstens teilweise aus einem metallischen Material besteht. Auf diese Weise kann die Festigkeit der Trennwand (bzw. der Trennwände) gezielt durch ein geeignet ausgebildetes Verstärkungselement eingestellt bzw. erhöht werden. Besonders bevorzugt kann hierbei das Verstärkungselement in Form eines Metallbands ausgebildet sein.

Die Trennwand kann bevorzugt wenigstens teilweise aus einem aufgeschäumten Kunststoffmaterial bestehen. Ein aufgeschäumtes Kunststoffmaterial ermöglicht im Kollisionsfall insbesondere bei einem faltenden Zusammenstauchen der Trennwände bzw. einem Zusammenstauchen der Trennwände in einen übereinanderliegenden Zustand eine wirksame Absorption der Stoßenergie. Die Trennwand kann alternativ auch wenigstens teilweise aus einem metallischen Material oder wenigstens teilweise aus einem beliebigen Kunststoffmaterial bestehen.

Bei einer weiteren praktischen Ausführungsform weist der Extrusionshohlkörper wenigstens einen Wandungsbereich auf, der aus einer Mehrzahl von aneinander angrenzenden Schichten mit unterschiedlichen Festigkeiten gebildet ist, wobei die Schichten derart zueinander angeordnet sind, dass in einem Verbindungs-Zustand, in dem der Extrusionshohlkörper auf die Schiene aufgeschoben oder auf die Schiene aufgeschnappt ist, von jeweils zwei aneinander angrenzenden Schichten, die Schicht mit der größeren Festigkeit einen geringeren Abstand zu der Schiene aufweist. Ein derart ausgebildeter Wandungsbereich ist beispielsweise durch Mehrkomponentenextrusion herstellbar.

Auch mittels dieser weiteren praktischen Ausführungsform kann die Stoßenergie stufenförmig absorbiert werden, derart, dass der größte Teil der Stoßenergie von den sich näher an der Schiene befindlichen Schichten mit der größeren Festigkeit absorbiert wird.

### Kurzbeschreibung der Zeichnungen

Nachfolgend werden zwei Absorberelemente anhang der beigefügten Zeichnungen näher erläutert. Es zeigt:
- Fig. 1: eine schematische dreidimensionale Darstellung eines ersten Absorberelements,
- Fig. 2: einen Längsabschnitt des ersten Absorberelements in vergrößerter Darstellung,
- Fig. 3: eine schematische dreidimensionale Darstellung eines Verbindungsbereichs einer Verbindung des Absorberelements der Fig. 1 mit einer Schiene eines Biegeträgers eines Kraftfahrzeugs,
- Fig. 4: eine schematische dreidimensionale Darstellung eines zweiten Absorberelements,
- Fig. 5: einen Längsabschnitt des zweiten Absorberelements in vergrößerter Darstellung,
- Fig. 6: eine Draufsicht auf eine Anordnung, umfassend ein Absorberelement der Fig. 4, einen Biegeträger und ein Dämpfungselement in Form einer Crash-Box, wobei Absorberelement mit einer Schiene des Biegeträgers verbunden ist,
- Fig. 7: einen Querschnitt durch die Anordnung der Fig. 6,
- Fig. 8: eine vergrößerte Detaildarstellung eines Details der Fig. 7,
- Fig. 9: einen Längsschnitt durch die Anordnung der Fig. 6, und
- Fig. 10: veranschaulicht sehr schematisch mögliche Hohlraum-Formen des Absorberelements im Querschnitt.

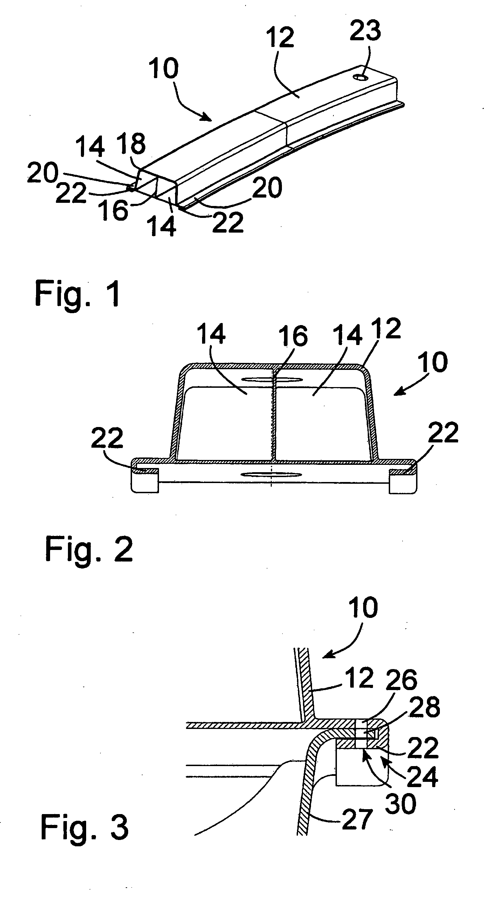

Die Fig. 1 zeigt eine schematische dreidimensionale Darstellung eines ersten Absorberelements 10 für ein Kraftfahrzeug. Das Absorberelement 10 ist als länglicher Extrusionshohlkörper 12 aus Kunststoff ausgebildet, der zwei Hohlräume 14 aufweist, die durch eine Trennwand 16 voneinander getrennt sind. Der Extrusionshohlkörper 12 weist eine Wandung 18 auf, wobei an der Außenfläche der Wandung 18 zwei längliche, sich in Längsrichtung des Extrusionshohlkörpers 12 erstreckende Verbindungselemente 20 angeformt sind, die im Querschnitt U-förmige Endbereiche 22 aufweisen (vgl. auch Fig. 2). Mittels der Endbereiche 22 ist der Extrusionshohlkörper 12 auf eine Schiene eines Biegeträgers des Kraftfahrzeugs aufschiebbar, um den Extrusionshohlkörper 12 außerhalb der Hohlräume 14 mit der Schiene zu verbinden.

Das Absorberelement 10 ist ferner mit einem sich durchgehend durch das Absorberelement 10 erstreckenden Durchgangsloch 23 versehen. Zum Abschleppen des Kraftfahrzeugs kann durch dieses Durchgangsloch 23 z.B. eine Abschleppöse gesteckt werden.

Die Fig. 3 zeigt eine schematische dreidimensionale Darstellung eines Verbindungsbereichs 24 einer Verbindung des Extrusionshohlkörpers 12 mit der Schiene 27 des Biegeträgers. Ein einziger Längsabschnitt des Extrusionshohlkörpers 12 kann zum ortsfesten Befestigen des Extrusionshohlkörpers 12 an der Schiene 27 mittels eines Befestigungsmittels eingerichtet sein, und zwar beispielsweise derart, dass der Längsabschnitt wenigstens eine sich in Querrichtung erstreckende Öffnung 26 aufweist (in Fig. 3 lediglich schematisch veranschaulicht), welche einen der im Querschnitt U-förmigen Endbereiche 22 durchsetzt. Vorzugsweise weist der Längsabschnitt zwei derartiger Öffnungen 26 auf, wobei jeweils eine Öffnung 26 an einem der beiden Verbindungselemente 20 vorgesehen ist. Fluchtend zu den Öffnungen 26 des Verbindungselements 20 ausgerichtete Öffnungen 28, welche die Schiene 27 durchsetzen, ermöglichen die Ausbildung von sich durchgehend durch den Extrusionshohlkörper 12 und die Schiene erstreckenden Befestigungsöffnungen 30, welche für die Durchführung eines Befestigungsmittel, wie z.B. einer Schraube oder ähnlichem, vorgesehen sind.

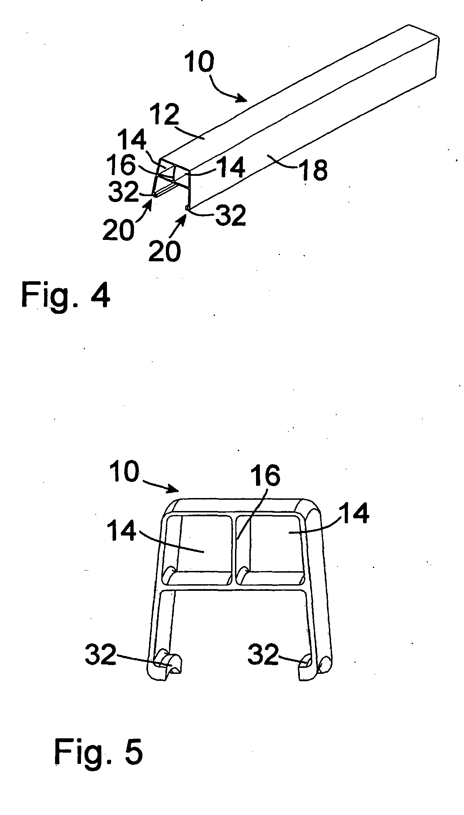

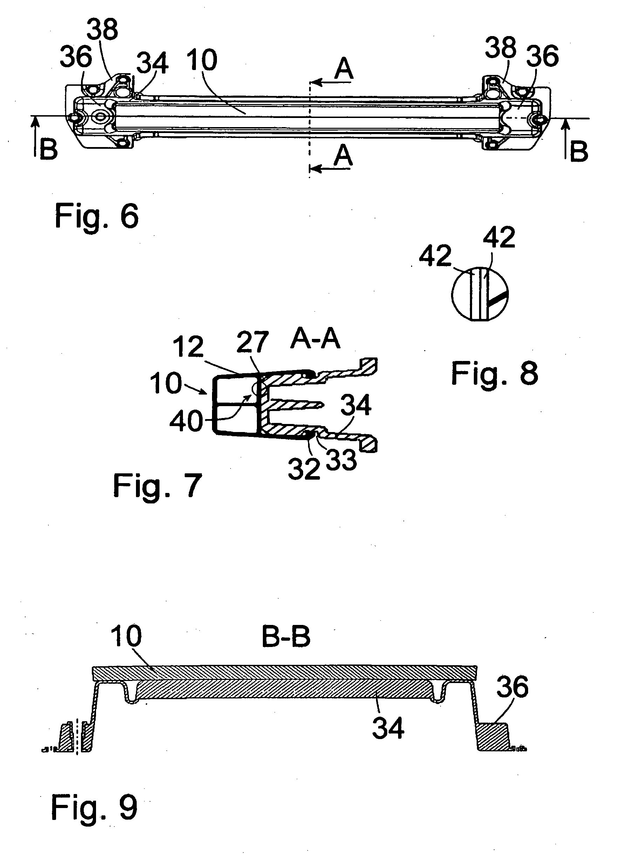

Die Fig. 4 zeigt eine schematische dreidimensionale Darstellung eines zweiten Absorberelements, wobei der Extrusionshohlkörper 12 im Unterschied zu dem in Fig. 1 dargestellten Absorberelement auf die Schiene 27 des Biegeträgers aufschnappbar ist bzw. auf die Schiene 27 des Biegeträgers aufschnappbar ausgebildet ist. Der Extrusionshohlkörper 12 weist eine Wandung 18 auf, wobei an der Innenfläche der Wandung 18 zwei längliche, sich in Längsrichtung des Extrusionshohlkörpers 12 erstreckende Verbindungselemente 20 angeformt sind, wobei jedes Verbindungselement 20 einen sich in Richtung des jeweils gegenüberliegenden Verbindungselements 20 erstreckenden Rastvorsprung 32 aufweist, der korrespondierend zu einer an der Schiene des Biegeträgers vorgesehenen Rastvertiefung 33 ausgebildet ist (siehe Fig. 7).

Die Fig. 5 zeigt einen Längsabschnitt des zweiten Absorberelements in vergrößerter Darstellung.

Die Fig. 6 zeigt eine Draufsicht auf eine Anordnung, umfassend ein Absorberelement 10 gemäß dem zweiten Element (vgl. Fig. 4), einen Biegeträger 34 in Form eines Querträgers 34, zwei Dämpfungselemente 36 jeweils in Form einer sogenannten Crash-Box und zwei Flanschplatten 38, wobei das Absorberelement 10 auf die Schiene 27 des Biegeträgers 34 aufgeschnappt ist, derart, dass die Rastvorsprünge 32 in korrespondierend ausgebildete Rastvertiefungen 33 eingreifen, wie aus Fig. 7 ersichtlich, die einen Querschnitt mit Schnittebene A-A durch die Anordnung der Fig. 6 zeigt. Der Biegeträger 34 ist über die beiden Dämpfungselemente 36 an den zwei Flanschplatten 38 befestigt, wobei jede Flanschplatte 38 an einem Fahrzeugrahmen des Kraftfahrzeugs, z.B. in Form eines Längsträgers, befestigbar ist. Der Biegeträger 34 kann z.B. aus einem faserverstärkten Polymermaterial bestehen. Der Biegeträger 34 kann aber auch z.B. in Form eines umgeformten Stahlteils ausgebildet sein.

Die Fig. 8 zeigt eine vergrößerte Detaildarstellung eines Details der Fig. 7. Wie nur in die der vergrößerten Detaildarstellung schematisch veranschaulicht, weist der Extrusionshohlkörper 12 wenigstens einen Wandungsbereich 40 auf, der aus zwei aneinander angrenzenden Schichten 42 mit unterschiedlichen Festigkeiten gebildet ist, wobei die Schichten 42 derart zueinander angeordnet sind, dass in dem Verbindungs-Zustand, in dem der Extrusionshohlkörper 12 auf die Schiene 27 aufgeschnappt ist, von den beiden Schichten 42, die Schicht 42 mit der größeren Festigkeit einen geringeren Abstand zu der Schiene 27 aufweist. Die Herstellung dieses Wandungsbereichs 40 kann beispielsweise durch Mehrkomponentenextrusion erfolgen.

Die Fig. 9 zeigt einen Längsschnitt durch die Anordnung der Fig. 6.

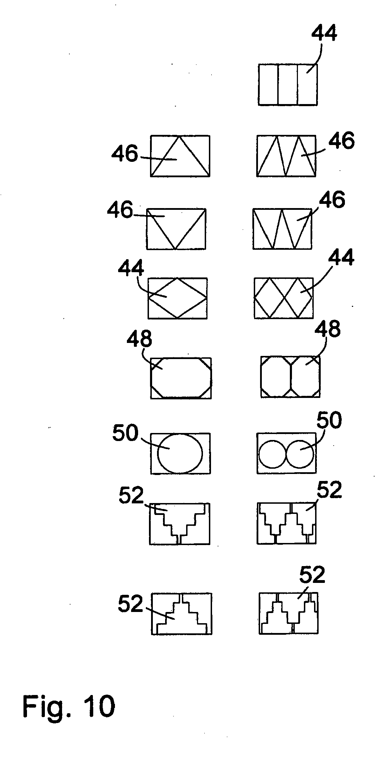

Die Fig. 10 veranschaulicht sehr schematisch mögliche Hohlraum-Formen des Absorberelements 10. So kann der Hohlraum 14 bzw. können die Hohlräume 14 im Querschnitt z.B. allgemein in Form eines Vielecks ausgebildet sein, wie z.B. in Form eines Vierecks 44, eines Dreiecks 46, eines Fünfecks (nicht dargestellt), eines Sechsecks (nicht dargestellt), eines Achtecks 48, eines Kreises 50, oder auch in Form eines Hohlraums mit wenigstens einer stufenförmigen Trennwand 52 ausgebildet sein. Alternativ können die stufenförmig dargestellten Trennwände 52 auch wellenförmig ausgebildet sein (nicht dargestellt).

Weiterhin können auch die Wandungsbereiche eine im Querschnitt wellenförmige Struktur aufweisen (nicht dargestellt). Die Form bzw. Dimensionierung eines Hohlraums bzw. der Hohlräume kann hierbei an den jeweils zur Verfügung stehenden Bauraum und/oder die Lastanforderungen angepasst werden.

## Patentansprüche

1. Absorberelement (10) für ein Kraftfahrzeug, wobei das Absorberelement (10) als länglicher Extrusionshohlkörper (12) ausgebildet ist, wobei der Extrusionshohlkörper (12) außerhalb des Hohlraums (14) mit einer Schiene (27) eines Biegeträgers (34) des Kraftfahrzeugs verbindbar ist, wobei der Extrusionshohlkörper (12) eine Mehrzahl von wenigstens drei Hohlräumen (14) aufweist, die durch eine Mehrzahl von wenigstens zwei Trennwänden (16) voneinander getrennt sind, **dadurch gekennzeichnet, dass** sich bei wenigstens einem Teil der Trennwände (16) die Festigkeiten der Trennwände (16) voneinander unterscheiden, wobei die Trennwände (16) mit unterschiedlichen Festigkeiten derart zueinander angeordnet sind, dass in einem Verbindungs-Zustand, in dem der Extrusionshohlkörper (12) auf die Schiene (27) aufgeschoben oder auf die Schiene (27) aufgeschnappt ist, von jeweils zwei Trennwänden (16) diejenige mit dem größeren Abstand zu der Schiene (27) eine geringere Festigkeit aufweist.

2. Absorberelement (10) nach Anspruch 1, **dadurch gekennzeichnet, dass** der Extrusionshohlkörper (12) in Längsrichtung auf die Schiene (27) aufschiebbar oder auf die Schiene (27) aufschnappbar ist.

3. Absorberelement (10) nach Anspruch 2, **dadurch gekennzeichnet, dass** ein einziger Längsabschnitt des Extrusionshohlkörpers (12) zum ortsfesten Befestigen des Extrusionshohlkörpers (12) an der Schiene (27) mittels eines Befestigungsmittels eingerichtet ist.

4. Absorberelement (10) nach Anspruch 3, **dadurch gekennzeichnet, dass** der Längsabschnitt auf halber Länge des Extrusionshohlkörpers (12) vorgesehen ist.

5. Absorberelement (10) nach einem der vorangehenden Ansprüche, **dadurch gekennzeichnet, dass** der Extrusionshohlkörper (12) wenigstens teilweise aus einem Polymermaterial besteht.

6. Absorberelement (10) nach einem der vorangehenden Ansprüche, **dadurch gekennzeichnet, dass** der Extrusionshohlkörper (12) in Umgebung der Trennwand (16) eine Wandstärke aufweist, die größer ist als die Wandstärke der Trennwand (16).

7. Absorberelement (10) nach Anspruch 6, **dadurch gekennzeichnet, dass** die Wandstärke der Trennwand (16) innerhalb eines Bereichs des 0,4-fachen bis 0,8-fachen der Wandstärke in Umgebung der Trennwand (16) liegt.

8. Absorberelement (10) nach Anspruch 6 oder 7, **dadurch gekennzeichnet, dass** die Wandstärke in Umgebung der Trennwand (16) 1 mm bis 10 mm oder 1,5 mm bis 8 mm oder 2 mm bis 5 mm beträgt.

9. Absorberelement (10) nach einem der vorangehenden Ansprüche, **dadurch gekennzeichnet, dass** in die Trennwand (16) wenigstens ein Verstärkungselement eingebettet ist, das wenigstens teilweise aus einem metallischen Material besteht.

10. Absorberelement (10) nach einem der vorangehenden Ansprüche, **dadurch gekennzeichnet, dass** die Trennwand (16) wenigstens teilweise aus einem aufgeschäumten Kunststoffmaterial besteht.

11. Absorberelement (10) nach einem der vorangehenden Ansprüche, **dadurch gekennzeichnet, dass** die Hohlräume (14) eine Struktur bilden, die im Querschnitt wabenförmig ausgebildet ist.

12. Absorberelement (10) nach einem der vorangehenden Ansprüche, **dadurch gekennzeichnet, dass** der Extrusionshohlkörper (12) wenigstens einen Wandungsbereich (40) aufweist, der aus einer Mehrzahl von aneinander angrenzenden Schichten (42) mit unter-schiedlichen Festigkeiten gebildet ist, wobei die Schichten (42) derart zueinander angeordnet sind, dass in einem Verbindungs-Zustand, in dem der Extrusionshohlkörper (12) auf die Schiene (27) aufgeschoben oder auf die Schiene (27) aufgeschnappt ist, von jeweils zwei aneinander angrenzenden Schichten (42), die Schicht (42) mit der größeren Festigkeit einen geringeren Abstand zu der Schiene (27) aufweist.

## Claims

1. Absorber element (10) for a motor vehicle, the absorber element (10) being formed as an elongated extruded hollow body (12), the extruded hollow body (12) being able to be connected outside the hollow space (14) to a rail (27) of a bumper bracket (34) of the motor vehicle, the extruded hollow body (12) having a plurality of at least three hollow spaces (14), which are separated from one another by a plurality of at least two separating walls (16), **characterized in that** in the case of at least some of the separating walls (16) the strengths of the separating walls (16) differ from one another, the separating walls (16) of differing strengths being arranged in relation to one another in such a way that, in a state of connection in which the extruded hollow body (12) has been pushed onto the rail (27) or has been snap-fitted onto the rail (27), of every two separating walls (16) the one that is the greater distance from the rail (27) has a lower strength.

2. Absorber element (10) according to Claim 1, **characterized in that** the extruded hollow body (12) can be pushed onto the rail (27) or can be snap-fitted onto the rail (27) in the longitudinal direction.

3. Absorber element (10) according to Claim 2, **characterized in that** a single longitudinal portion of the extruded hollow body (12) is designed for fastening the extruded hollow body (12) fixedly in place on the rail (27) by means of a fastening means.

4. Absorber element (10) according to Claim 3, **characterized in that** the longitudinal portion is provided over half the length of the extruded hollow body (12).

5. Absorber element (10) according to one of the preceding claims, **characterized in that** the extruded hollow body (12) at least partially consists of a polymer material.

6. Absorber element (10) according to one of the preceding claims, **characterized in that** the extruded hollow body (12) has in the vicinity of the separating wall (16) a wall thickness that is greater than the wall thickness of the separating wall (16).

7. Absorber element (10) according to Claim 6, **characterized in that** the wall thickness of the separating wall (16) lies within a range of 0.4 to 0.8 of the wall thickness in the vicinity of the separating wall (16).

8. Absorber element (10) according to Claim 6 or 7, **characterized in that** the wall thickness in the vicinity of the separating wall (16) is 1 mm to 10 mm or 1.5 mm to 8 mm or 2 mm to 5 mm.

9. Absorber element (10) according to one of the preceding claims, **characterized in that** at least one reinforcing element, which at least partially consists of a metallic material, is embedded in the separating wall (16).

10. Absorber element (10) according to one of the preceding claims, **characterized in that** the separating wall (16) at least partially consists of an expanded plastics material.

11. Absorber element (10) according to one of the preceding claims, **characterized in that** the hollow spaces (14) form a structure that in cross section has the form of a honeycomb.

12. Absorber element (10) according to one of the preceding claims, **characterized in that** the extruded hollow body (12) has at least one wall region (40) that is formed from a plurality of layers (42) of differing strengths adjacent to one another, the layers (42) being arranged in relation to one another in such a way that, in a state of connection in which the extruded hollow body (12) has been pushed onto the rail (27) or has been snap-fitted onto the rail (27), of every two layers (42) that are adjacent to one another the layer (42) of the greater strength is at a smaller distance from the rail (27).

## Revendications

1. Élément absorbeur (10) pour un véhicule automobile, l'élément absorbeur (10) étant réalisé sous forme de corps creux extrudé allongé (12), le corps creux extrudé (12) pouvant être relié à un rail (27) d'une poutre sollicitée en flexion (34) du véhicule automobile à l'extérieur de l'espace creux (14), le corps creux extrudé (12) comprenant une pluralité d'au moins trois espaces creux (14) qui sont séparés les uns des autres par une pluralité d'au moins deux parois de séparation (16), **caractérisé en ce que**, pour au moins une partie des parois de séparation (16), les solidités des parois de séparation (16) diffèrent les unes des autres, les parois de séparation (16) présentant des solidités différentes étant disposées les unes par rapport aux autres de telle sorte que, dans un état de liaison dans lequel le corps creux extrudé (12) est enfilé sur le rail (27) ou est encliqueté sur le rail (27), parmi deux parois de séparation respectives (16), celle qui présente la plus grande distance par rapport au rail (27) présente une plus faible solidité.

2. Élément absorbeur (10) selon la revendication 1, **caractérisé en ce que** le corps creux extrudé (12) peut être enfilé sur le rail (27) dans la direction longitudinale ou peut être encliqueté sur le rail (27).

3. Élément absorbeur (10) selon la revendication 2, **caractérisé en ce qu'**une portion longitudinale unique du corps creux extrudé (12) est conçue pour la fixation à demeure du corps creux extrudé (12) sur le rail (27) par le biais d'un moyen de fixation.

4. Élément absorbeur (10) selon la revendication 3, **caractérisé en ce que** la portion longitudinale est prévue à mi-longueur du corps creux extrudé (12).

5. Élément absorbeur (10) selon l'une quelconque des revendications précédentes, **caractérisé en ce que** le corps creux extrudé (12) est constitué au moins partiellement d'un matériau polymère.

6. Élément absorbeur (10) selon l'une quelconque des revendications précédentes, **caractérisé en ce que** le corps creux extrudé (12) présente, au voisinage de la paroi de séparation (16), une épaisseur de paroi qui est supérieure à l'épaisseur de paroi de la paroi de séparation (16).

7. Élément absorbeur (10) selon la revendication 6, **caractérisé en ce que** l'épaisseur de paroi de la paroi de séparation (16) se situe dans une plage allant de 0,4 fois jusqu'à 0,8 fois l'épaisseur de paroi au voisinage de la paroi de séparation (16).

8. Élément absorbeur (10) selon la revendication 6 ou 7, **caractérisé en ce que** l'épaisseur de paroi au voisinage de la paroi de séparation (16) vaut de 1 mm jusqu'à 10 mm ou de 1,5 mm jusqu'à 8 mm ou encore de 2 mm jusqu'à 5 mm.

9. Élément absorbeur (10) selon l'une quelconque des revendications précédentes, **caractérisé en ce qu'**au moins un élément de renforcement est encastré dans la paroi de séparation (16), lequel élément de renforcement est constitué au moins partiellement d'un matériau métallique.

10. Élément absorbeur (10) selon l'une quelconque des revendications précédentes, **caractérisé en ce que** la paroi de séparation (16) est constituée au moins partiellement d'un matériau plastique moussé.

11. Élément absorbeur (10) selon l'une quelconque des revendications précédentes, **caractérisé en ce que** les espaces creux (14) forment une structure qui est réalisée, en section transversale, en forme de nid d'abeilles.

12. Élément absorbeur (10) selon l'une quelconque des revendications précédentes, caractérisé en ce le corps creux extrudé (12) comprend au moins une région de paroi (40) qui est formée à partir d'une pluralité de couches (42) adjacentes les unes aux autres présentant des solidités différentes, les couches (42) étant disposées les unes par rapport aux autres de telle sorte que, dans un état de liaison dans lequel le corps creux extrudé (12) est enfilé sur le rail (27) ou est encliqueté sur le rail (27), parmi deux couches respectives adjacentes l'une à l'autre (42), la couche (42) qui présente la plus grande solidité présente une plus faible distance par rapport au rail (27).
